# EUROPEAN PATENT SPECIFICATION

(11) **EP 2 900 776 B1**
(45) Date of publication and mention of the grant of the patent: **23.05.2018**
(21) Application number: 13841598.9
(22) Date of filing: 27.09.2013
(51) Int. Cl.: D06M 11/00, D06M 11/74, D06M 11/47, D06M 11/53, D06M 11/82, D06P 1/00, D06P 1/44, C09D 5/18, C09D 17/00, C09K 21/00, C08K 3/00

(54) **FLAME RETARDANT PIGMENT PASTE COMPOSITION**
FLAMMENHEMMENDE PIGMENTPASTENZUSAMMENSETZUNG
COMPOSITION DE PÂTE PIGMENTAIRE IGNIFUGE

(30) Priority: 28.09.2012 US 201261706884 P
(43) Date of publication of application: 05.08.2015
(73) Proprietor: Saint-Gobain ADFORS Canada, Ltd., Grand Island, NY 14072 (US)
(72) Inventor: LI, Chuanping, Shrewsbury, Massachusetts 01545 (US); WANG, Fei, Stoneham, Massachusetts 02180 (US); ORF, Nicholas D., Natick, Massachusetts 01760 (US); HAYOUN, Pascaline, Philadelphia, Pennsylvania 19107 (US)
(74) Representative: Zimmermann & Partner Patentanwälte mbB
(86) International application number: PCT/US2013/062362
(87) International publication number: WO 2014/052867

(56) References cited:
- WO-A2-2009/057104
- WO-A2-2009/057104
- FR-A1- 2 939 152
- JP-A- 2011 527 714
- KR-A- 20110 137 923
- US-A- 4 594 286
- US-A1- 2002 058 736
- US-B2- 7 205 352

## Description

### FIELD OF THE DISCLOSURE

The present disclosure relates to a pigment paste composition and methods of making the pigment paste composition.

### BACKGROUND

The general purpose of screens (also called "bug", "fly", or "insect" screens) is to eliminate the ingress of insects, while providing ventilation and visibility. A typical screen assembly is made up of screen cloth, fabric, or mesh attached to a screen frame. For brevity, the term "screen" will be used hereafter, and includes such screen cloth, fabric, mesh or similar ventilation material. Screens are typically used for windows, doors, operable skylights, and the like for building structures.

It is desirable that the screen be a light weight fabric or mesh. Typically, the screen is fiberglass yarn or roving, which is coated, for example, with a polymer resin such as polyvinyl chloride (PVC), woven, and heat fused. Typically, the coating provides several desirable properties to the screen such as pigmentation, flame retardancy, tensile strength, and wear resistance. For instance, the coating typically includes a pigment paste composition that is mixed with the polymer resin, the pigment paste composition providing flame retardancy and pigmentation to the coating. The pigment paste composition must be stable and remain dispersed within the polymer resin. Furthermore, the screen composed of the pigmented resin must have a flame length of less than 30.0 cm when subjected to the ASTM D6413 test.

Problems arise with commercially available pigment paste compositions. For instance, issues of the pigment paste compositions include poor dispersion of aggregates, non-uniform distribution, settling and color separation when the pigment paste composition is mixed with the polymer resin. Further, many flame retardants within the pigment paste composition have drawbacks such as cost, environmental issues, and problematic loading levels. With the addition of some flame retardant components, the viscosity increases and results in poor coating of the pigment paste composition mixed with the polymer resin when applied on the fabric of a screen.

FR 2939152 A1 describes a photoluminescent composite yarn formed from a core comprising a continuous yarn, obtained by spinning fibres made of an organic or inorganic synthetic material or natural fibres, and from a polymer material formed around the core, characterized in that the outer surface of the core is of light or white colour and in that the polymer material formed around the core is transparent or translucent and contains a photoluminescent pigment. A flame-retardant filler may be incorporated into at least one of the polymer materials.

US 4594286 describes a flame retardant, water-proof fabric. WO 2009/057104 A2 describes a formulation for rendering surfaces fireproof by application thereon.

Accordingly, there is a need for an improved pigment paste composition.

### SUMMARY

In an embodiment, a pigment paste composition is provided. The pigment paste composition includes a) a flame retardant including a combination of antimony oxide, a borate compound, and zinc sulfide; b) a coloring agent; c) a solvent comprising a plasticizer; and d) a wetting and dispersing agent.

In another embodiment, a fabric is provided. The fabric includes at least one fiber coated with a coating having a pigment paste composition dispersed within a polymer base, wherein the pigment paste composition includes a) a flame retardant including a combination of antimony oxide, a borate compound, and zinc sulfide; b) a coloring agent; c) a solvent comprising a plasticizer; and d) a welling and dispersing agent.

In an embodiment, a method of providing a flame retarding composition is provided. The method includes providing a pigment paste composition. The pigment paste composition includes a) a flame retardant including a combination of antimony oxide, borate compound
and zinc sulfide; b) a coloring agent; c)
a solvent including a plasticizer; and d) a wetting and dispersing agent.

In yet another embodiment, a method of making a screen is provided. The method includes applying a coating on at least one first fiber and at least one second fiber, the coating having a pigment paste composition dispersed within a polymer base. The pigment paste composition includes a) a flame retardant including a combination of antimony oxide, borate compound
and zinc sulfide; b) a coloring agent; c)
a solvent including a plasticizer; and d) a wetting and dispersing agent. The method further includes orienting the at least one first fiber in a main direction; and orienting the at least one second fiber in a cross direction relative to the main direction.

### BRIEF DESCRIPTION OF THE DRAWINGS

Embodiments are illustrated by way of example and are not limited in the accompanying figures.

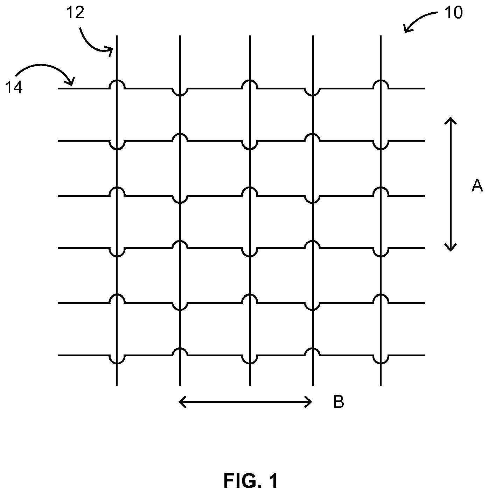

FIG. 1 includes an illustration of a woven screen in accordance with an embodiment described

Skilled artisans appreciate that elements in the figures are illustrated for simplicity and clarity and have not necessarily been drawn to scale. For example, the dimensions of some of the elements in the figures may be exaggerated relative to other elements to help to improve understanding of embodiments of the invention.

### DETAILED DESCRIPTION

The present invention provides a pigment paste composition. The pigment paste composition includes a) a flame retardant, b) a coloring agent, c) a solvent, and d) a wetting and dispersing agent. The pigment paste composition is typically dispersed within a coating composition for a fiber. In an embodiment, the pigment paste composition is dispersed within a polymer base for coating on a fiber. The pigment paste composition as described has a desirable flame resistance and dispersion within a polymer base compared to conventionally available pigment paste compositions.

The pigment paste composition includes a flame retardant. Any reasonable flame retardant is envisioned that provides flame retardancy or flame resistance to the coating and ultimately, the fibers which the coating is applied thereon. Exemplary flame retardants include antimony oxide, a halogen, phosphorus, alumina trihydrate (ATH), magnesium hydroxide (MDH), a zinc compound such as zinc oxide, and zinc sulfide, a borate compound such as zinc borate, boron oxide, boric acid, calcium metaborate, and barium metaborate, or a combination thereof. In a particular embodiment, the flame retardant includes antimony oxide, a zinc compound, or a combination thereof. In another particular embodiment, the flame retardant includes antimony oxide, a borate compound, or a combination thereof.

In an embodiment, a selection of a combination of flame retardants is particularly useful to provide a synergistic effect for the pigment paste composition. A "synergistic effect" as used herein refers to less loading of the flame retardant within the pigment paste composition while maintaining its flame retardant performance as required by ASTM D3656 (the Standard Specification for Insect Screening and Louver Cloth Woven from Vinyl-Coated Glass Yarns) or ASTM D6413 (the Standard Test Method for Flame Resistance of Textiles (vertical test)). In an embodiment, the flame retardant is a combination of antimony oxide, zinc borate and zinc sulfide. Any reasonable ratio of the flame retardants is envisioned. For instance, the flame retardant combination of antimony oxide, zinc borate, and zinc sulfide are present at a ratio of about 2:1:1 to about 1:2:2. In a particular embodiment, the synergistic effect of the combination of flame retardants is non-linear in relation to the reduction of flame height. In an exemplary embodiment, the total amount of flame retardant is present in any reasonable amount to provide a flame height of less than 30.0 centimeters (cm) when measured by ASTM D6413 or ASTM D3656. For instance, the total amount of flame retardant is at least about 15 weight % (wt%). In an embodiment, the total amount of flame retardant is not greater than about 55 wt%. For instance, the total amount of flame retardant is present at about 30.0 wt% to about 40.0 wt% based on the total weight % of the pigment paste composition.

In a particular embodiment, the combination of flame retardants provides a synergistic effect such that less antimony oxide can be used than with conventional pigment paste compositions. For instance, the antimony oxide is present at an amount of less than about 15.0 wt % based on the total weight % of the pigment paste composition. In an embodiment, the antimony oxide is present at an amount of at least about 5.0 wt%, such about 10.0 wt% to about 15.0 wt %. In an embodiment, zinc borate is present at an amount of at least about 0%, such as about 10.0 wt% to about 20.0 wt %. In an embodiment, zinc sulfide is present at an amount of at least about 10.0 wt%, such as about 16.0 wt% to about 20.0 wt%. In an embodiment, the pigment paste composition may be substantially free of other flame retardants in addition to the combination of antimony oxide, zinc borate, and zinc sulfide. "Substantially free" as used herein refers to less than about 0.1 wt%, or even less than about 0.01 wt%, based on the total weight % of the pigment paste composition.

In an embodiment, the pigment paste composition further includes a coloring agent to provide color to the paste composition. Any reasonable coloring agent, such as a colorant or pigment, is envisioned that alters the optical properties of the pigment paste composition. An exemplary coloring agent provides any color desired such as black, red, yellow, orange, blue, green, purple, white, and combinations thereof. For instance, the coloring agent includes carbon black, iron black pigments as black pigments; quinacridone pigments, cromophtal pigments, azo pigments, diketopyrrolopyrrole pigments, anthraquinone pigments as red pigments; azo pigments, imidazolone pigments, titanium yellow pigments as yellow pigments; indanthrene pigments, azo pigmentsas orange pigments; phthalocyanine pigments, ultramarine blue, iron blue, as blue pigments; phthalocyanine pigments as green pigments; dioxazine pigments, quinacridone pigment, as purple pigments; and titanium oxide, aluminum silicate, silicon oxide, as white pigments. In a particular embodiment, the coloring agent is present at an amount to provide any desirable color. For instance, the amount is typically dependent upon the coloring agent as well as the desired color. For instance, the coloring agent is present at an amount of at least about 1.0 wt%, based on the total weight % of the pigment paste composition. In an embodiment, the coloring agent is present in an amount of about 1.0 wt% to about 10.0 wt%, or even about about 3.0 wt% to about 8.0 wt% based on the total weight % of the pigment paste composition.

Further included within the pigment paste composition is a solvent. Any reasonable solvent is envisioned. For instance, any reasonable solvent provides a carrier medium to disperse the pigment paste composition into the polymer base. In an embodiment, the solvent is a plasticizer. In a particular embodiment, the plasticizer is a terephthalate, an ortho-phthalate, a trimellitate, an adipate, a benzoate, an epoxidized vegetable oil, a sulfonamide, an organophosphate, a glycol/polyether blend, a polymeric plasticizer, a biodegradable plasticizer, or a combination thereof. In a more particular embodiment, the plasticizer is a terephthalate, for example, dioctyl terephthalate. Typically, the solvent is present in an amount to disperse the pigment paste composition into the polymer base. For instance, the solvent is present in an amount of about 20.0 wt% to about 80.0 wt%, such as about 35.0 wt% to about 60.0 wt% based on the total weight % of the pigment paste composition.

The pigment paste composition further includes a wetting and dispersing agent. Any reasonable wetting and dispersing agent is envisioned. The wetting and dispersing agent is typically present to prevent the settling of particles, such as particles of the coloring agent and the combination of flame retardants. In a particular embodiment, the wetting and dispersing agent is a polar acidic ester of an alcohol, an alkylammonium salt of a high molecular weight copolymer, a modified urea solution, or a combination thereof. The modified urea solution may be present in a solvent that may act as a viscosity modifier to provide reasonable dispersion of the pigment paste composition within the polymer base. The modified urea may be in any reasonable viscosity modifier such as, for example, N-Methylpyrrolidone. Any reasonable amount of wetting and dispersing agent is envisioned. In an embodiment, the wetting and dispersing agent is present at an amount of at least about 0.5 wt%, based on the total weight of the pigment paste composition. For instance, the wetting and dispersing agent is present in an amount of about 0.5 wt% to about 3.0 wt%, based on the total weight % of the pigment paste composition.

The pigment paste composition may further include any reasonable additives in addition to the components described, such as, for example, a defoaming agent, a thermal stabilizer, an anti-static agent, a lubricant, an ultraviolet (UV) stabilizer, or any combination thereof. In another embodiment, the pigment paste composition is substantially free of any additives in addition to the components described. "Substantially free" as used herein refers to less than about 0.1 wt%, or even less than about 0.01 wt%, based on the total weight % of the pigment paste composition.

The pigment paste composition may be dispersed in any reasonable polymer base. For instance, the pigment paste composition may be dispersed in a polymer base for application onto a substrate, such as a fiber, to provide properties such as flame retardancy and pigmentation to the substrate. Any reasonable amount of pigment paste composition within the polymer base is envisioned. Typically, the pigment paste composition is present within the polymer base at about 3.0 wt% to about 15.0 wt%, such as about 5.0 wt% to about 15.0 wt% of the total weight of the polymer base. Further, the polymer base may provide other properties to the substrate such as desirable physical and mechanical properties. Properties include wear resistance, tear strength, tensile strength, stiffness, or combinations thereof. The polymer base may be chosen depending on the properties desired.

Any reasonable polymeric base includes a thermoplastic or thermoset material. In an embodiment, the polymeric base is polyvinyl chloride (PVC), polyethylene, polypropylene, polystyrene, polyamide, chlorinated polyolefin, chlorinated rubber, a chlorinated ethylene vinyl acetate copolymer, polyacrylate, an ethylene vinyl acetate copolymer, polyurethane, polystyrene-butadiene, or combination thereof. In a particular embodiment, the polymeric base is polyvinyl chloride (PVC). In a particular embodiment, the polymer base is a dispersion of PVC, such as plastisol.

The polymer base may further include any reasonable additive. Any reasonable additive includes a plasticizer, a thermal stabilizer, an anti-static agent, a lubricant, an ultraviolet (UV) stabilizer, a defoamer, or any combination of these substances. The thermal stabilizer may include any reasonable thermal stabilizer such as barium or zinc, or a combination thereof. In a particular embodiment, any anti-static agent is envisioned, such as a long carbon chain carboxylate. In an embodiment, any lubricant is envisioned, such as silicon oil. Any reasonable amount of additive is envisioned.

Typically, the pigment paste composition dispersed within the polymer base may be applied as a coating on the substrate, such as at least one fiber. For instance, the coating of the pigment paste composition dispersed within the polymer base may be applied on any fiber. In a particular embodiment, the coating may be present on the at least one fiber to provide properties such as the desired flame retardancy and pigmentation. In a particular embodiment, the coating thickness is continuous and uniform on the at least one fiber. For instance, the coating thickness is about 10 micron (µm) to about 200 µm. The coating of the at least one fiber may be performed by any reasonable method envisioned, such as by a dip coating or extrusion coating method. Further, the coating may be before, after, or during the assemblage of the at least one fiber into a desired fabric configuration.

The fabric can include a plurality of fibers, each of which may be described as a monofilament, however, skilled artisans will appreciate that a fiber may include other configurations. For example, the fiber may include a multi-strand, plied configuration, such as a multifilament. Any reasonable material may be envisioned as the fiber and is dependent upon the application of the fiber. In an embodiment, the fiber may include a monofilament or a multifilament of fiberglass, steel, aluminum, polyethylene, polypropylene, polyamide, polyaramid, carbon fiber, or combination of these compounds. In a particular embodiment, the fiber is a fiberglass. In an embodiment, the fiber, whether in a monofilament or a multifilament configuration, may be the same or different materials. The fiber, whether in a monofilament or a multifilament configuration, can also include various diameters. For example, any reasonable diameter is envisioned. In an embodiment, the diameter may be greater than about 5 microns, such about 5 microns to about 700 microns, such as about 50 microns to about 200 microns, or even about 100 microns to about 200 microns.

Any assembly or configuration of the fiber is envisioned. In an embodiment, the fiber may be formed into the fabric in the form of a scrim, a woven screen, a non-woven screen, a braided fabric, a knitted fabric, a chopped strand, or combination thereof. Any method of forming the fiber into the fabric is envisioned and is dependent upon the end-fabric application desired. A "chopped strand" typically describes randomly oriented chopped filaments or fibers, wherein the chopped filaments or fibers are randomly oriented individually or in a group. In an embodiment, a "non-woven mat" may have filaments, fibers, or swirled continuous filament that are randomly-oriented or oriented in a specified configuration. A "knitted fabric" typically includes a fabric produced by interloping chains of filaments, roving, or yarn. In a particular embodiment, the fiber is in the form of a scrim. A "scrim" may also be known as a "laid-scrim" and describes a fabric that is non-woven with warp yarns and weft yarns. A "woven screen" includes at least one first fiber and at least one second fiber oriented in any reasonable orientation.

In a particular embodiment, the at least one fiber is formed into a woven screen orientation. For instance, the woven screen describes a fabric have warp yarns and weft yarns that are intertwined at an intersection point. The warp yarns refer to yarns, fibers, or roving running lengthwise in long lengths and approximately parallel. The weft yarns refer to the threads that transverse the warp yarns. In a particular embodiment, the weft yarns run perpendicular to the warp and are also called fill, filling, yarn or woof. The fiber may be converted to fabric form by a conventional weaving operation, such as a loom, or a non-weaving operation. For instance, the at least one fiber includes an at least one first fiber and an at least one second fiber. In an embodiment, the at least one first fiber includes a plurality of first fibers in a main direction, such as the warp of the woven screen, and the at least one second fiber includes a plurality of second fibers in a cross-direction relative to the machine direction, such as the weft of the woven screen.

Any weaving construction can also be envisioned for the fabric. In an embodiment, weaving constructions include stitchbonding or warp knitting. Any conventional means to form the weaving construction include plain weaving, twill or satin weaving, unidirectional weaving, knitting or stitchbonding. In a particular embodiment, the first fibers and the second fibers are configured in a plain weave where each of the second fibers are carried over and under each of the first fibers, with each row of second fibers alternating, to produce a high number of intersections between the first fibers and the second fibers. In another embodiment, the first fibers and the second fibers can be configured in a leno weave where two or more first fibers can be twisted around each other as they are interlaced with one or more second fibers, or they can be configured in a half-leno weave. For each weave used, the configurations of the first fibers and the second fibers can also be altered by changing the densities of either of the first fibers or the second fibers or both in their respective directions.

The major characteristics of the knit or woven embodiments include its style or weave pattern, fabric count, twist, and the construction of warp yarn and weft yarn. As used here, "fabric count" identifies the number of warp and weft yarns per inch. "Twist" provides additional integrity to yarn before it is subjected to the weaving process. Any twist is envisioned. In combination, these major characteristics contribute to the fabric properties such as drapability and performance of the final product.

Turning to an exemplary method of making the woven screen, at least one first fiber and at least one second fiber as described above are provided. In an embodiment, the coating is applied on the at least one first fiber and the at least one second fiber by any reasonable method, such as by a dip coating or extrusion coating method. In a particular embodiment, both of the at least one first fiber and the at least one second fiber are made with their respective coatings via an extrusion process. For example, an extrusion process can be used to coat the at least one first fiber and the at least one second fiber with the polymer base and pigment paste composition dispersed therein. In an exemplary embodiment, the coating on the at least one first fiber and the coating on the at least one second fiber is the same. In an alternative embodiment, the coating on the at least one first fiber and the coating on the at least one second fiber is different. The coating may be applied on the at least one first fiber and the at least one second fiber concurrently or separately.

Once coated, the at least one first fiber and the at least one second fiber may be oriented in any reasonable orientation. For instance, the at least one first fiber and the at least one second fiber may be oriented in two orientations and configured to intersect in preparation for being woven together. Any reasonable weaving technique is envisioned. The at least one first fiber is oriented in the main direction of the woven screen which, in a particular embodiment, can include the warp of the woven screen while the at least one second fiber is oriented in the cross direction of the woven screen which, in an embodiment, can include the weft of the woven screen. The at least one first fiber and the at least one second fiber are woven together using a plain weave as described above or using any other reasonable weaving technique. For example, the at least one first fiber and the at least one second fiber can be woven together using machines produced by Sulzer, Picanol, Dornier, or Smit Textile.

The woven screen can be fixed with any reasonable means to secure the position of, and prevent the future movement of, the at least one first fiber and the at least one second fiber and their intersections within the woven screen such as by curing the coating. In a particular embodiment, the woven screen is fixed using a heated means. Any reasonable heating temperature and conditions are envisioned depending upon the coating. For example, the heating temperature can include a value in the range of about 160° Celsius to about 250° Celsius. The time needed to fix the woven screen can also include various times, including a curing time of between about 5 seconds to about 30 seconds, depending on the composition of the coating. In a particular embodiment, tentering or thermal bonding can be used to cure the coating on the at least one first fiber and the at least one second fiber and to fix the intersections between the at least one first fiber and the at least one second fiber. In an alternative embodiment, the fabric may be coated with the coating having the pigment paste composition dispersed within the polymer base after the at least one first fiber and the at least second fiber are fixed in a fabric configuration.

Turning to Figure 1, a woven screen is illustrated. The woven screen 10 includes first fibers 12 and second fibers 14 as described above. First fibers 12 are oriented in a main direction of the woven screen. That is, first fibers 12 are oriented in a direction parallel to line A. Second fibers 14 are oriented in a cross direction of the woven screen that is different than the main direction. That is, second fibers 14 are oriented in a direction parallel to line B that, in an embodiment, is perpendicular to line A. In a particular embodiment, first fibers 12 include the warp of woven screen 10 and second fibers 14 include the weft of woven screen 10. First fibers 12 and second fibers 14 are configured to intersect in a plain weave, where each of second fibers 14 are carried over and under each of first fibers 12 and each row of second fibers 14 alternates to produce a high number of intersections of first fibers 12 and second fibers 14. Although first fibers 12 and second fibers 14 are illustrated in a perpendicular orientation, any orientation of the first fibers 12 and the second fibers 14 is envisioned. Further, although first fibers 12 and second fibers 14 are illustrated in a plain weave, any weave is envisioned.

The coating with the pigment paste composition dispersed within the polymer base has desirable properties for a pigment paste composition. For instance, the combination of flame retardants used have a synergistic flame retardancy when dispersed in a polymer base and applied as a coating, providing lesser loading compared to when a combination of flame retardants are not used. In particular, the amount of antimony oxide can be reduced while the overall flame resistance of the pigment paste composition is maintained. Further, the pigment paste composition is a stable package that has desirable dispersion within the polymer base. A "desirable dispersion" as described herein refers to a homogenous dispersion of the pigment paste composition within the polymer base. For instance, the pigment paste composition does not settle even after one month unmoved and readily disperses into the polymer base. Further, the pigment paste composition has a desirable viscosity profile including thixotropic and shear thinning behavior to enable the desirable dispersion and prevent settling into the polymer base as well as provide a uniform and homogenous coating on the fiber or fabric. For instance, the pigment paste composition has a viscosity of about 1500 centipoise (cps) to about 3000 cps (with #3 Spindle at 30 RPM rotation speed, Brookfield LVE Viscometer at 25°C).

The fabric with the coating provides a product with advantageous properties such as flame retardancy and pigmentation. For instance, the coating provides a fiber or fabric with a flame height of less than 30.0 centimeters, as measured by ASTM D6413 or ASTM D3656. Further, the pigmentation and coloring of the coating on the fiber is homogenous and continuous, providing a desired visual appearance that is free of optical defects. The coating also provides joints of fibers and enhances properties such as adhesion strength, tension strength, tear strength, or a combination thereof to the fiber or fabric to which it is applied upon.

Applications for the fabric with the flame retardant coating are numerous. The flame retardant fabric can be employed in many end-use applications where flame retardancy is desired. For instance, the woven screen can include a variety of dimensions and is useful for both indoor and outdoor applications. In an embodiment, the woven screen may be part of an indoor window covering system that includes a screen to prevent insects from entering through the window. In other embodiments, the woven screen may be used as a fence or to provide a mesh covering for vents, tents, porches, and patios. Further end-use applications include, for example, any fabric configuration for building construction applications such as gypsum and cement boards, roofing applications, reinforcement such as polymer-matrix reinforcement, and as stand-alone coated fabrics in filters, screens and garment applications.

Many different aspects and embodiments are possible. Some of those aspects and embodiments are described herein.

Embodiments
may be in accordance with any one or more of the items as listed below.

Item 1. A pigment paste composition comprising a) a flame retardant comprising a combination of antimony oxide, zinc borate, and zinc sulfide; b) a coloring agent; c) a solvent comprising a plasticizer; and d) a wetting and dispersing agent.

Item 2. The pigment paste composition of Item 1, wherein the flame retardant is present in the pigment paste composition in an amount of about 30.0 wt% to about 40.0 wt%, based on the total weight % of the pigment paste composition.

Item 3. The pigment paste composition of Item 1, wherein the antimony oxide, the zinc borate, and the zinc sulfide are present in a ratio of about 2:1:1 to about 1:2:2.

Item 4. The pigment paste composition of Item 1, wherein the antimony oxide is present at not greater than about 15.0 wt%, based on the total weight % of the pigment paste composition.

Item 5. The pigment paste composition of Item 1, wherein the coloring agent comprises carbon black, an iron black pigment, a quinacridone pigment, a cromophtal pigment, an azo pigment, a diketopyrrolopyrrole pigment, an anthraquinone pigment, an imidazolone pigment, a titanium yellow pigment, an indanthrene pigment, a phthalocyanine pigment, ultramarine blue, iron blue, a dioxazine pigment, titanium oxide, aluminum silicate, silicon oxide, or a combination thereof.

Item 6. The pigment paste composition of Item 1, wherein the coloring agent is present in an amount of about 1.0 wt% to about 10.0 wt% based on the total weight % of the pigment paste composition.

Item 7. The pigment paste composition of Item 1, wherein the plasticizer comprises a terephthalate, an ortho-phthalate, a trimellitate, an adipate, a benzoate, an epoxidized vegetable oil, a sulfonamide, an organophosphate, a glycol/polyether blend, a polymeric plasticizer, a biodegradable plasticizer, or a combination thereof.

Item 8. The pigment paste composition of Item 7, wherein the plasticizer is dioctyl terephthalate.

Item 9. The pigment paste composition of Item 1, wherein the solvent is present in an amount of about 35.0 wt% to about 60.0 wt% based on the total weight % of the pigment paste composition.

Item 10. The pigment paste composition of Item 1, wherein the wetting and dispersing agent is a polar acidic ester of an alcohol, an alkylammonium salt of a high molecular weight copolymer, a modified urea solution, or combinations thereof.

Item 11. The pigment paste composition of Item 1, wherein the pigment paste composition is dispersed within a polymer base.

Item 12. The pigment paste composition of Item 11, wherein the polymer base comprises polyvinyl chloride (PVC), polyethylene, polypropylene, polystyrene, polyamide, chlorinated polyolefin, chlorinated rubber, a chlorinated ethylene vinyl acetate copolymer, polyacrylate, an ethylene vinyl acetate copolymer, polyurethane, polystyrene-butadiene, or combinations thereof.

Item 13. The pigment paste composition of Item 12, wherein the polymer base comprises PVC.

Item 14. The pigment paste composition of Item 11, having a dispersion that does not settle after one month unmoved and readily disperses into the polymer base.

Item 15. The pigment paste composition of Item 11, wherein the pigment paste composition is present in the polymer base at about 3.0 wt% to about 15.0 wt% of the total weight % of the polymer base.

Item 16. The pigment paste composition of Item 1, wherein the composition is a coating for a woven or nonwoven textile, screen, scrim, or combination thereof.

Item 17. The pigment paste composition of Item 16, having a flame height of less than 30.0 centimeters, as measured by ASTM D6413 or ASTM D3656.

Item 18. A fabric comprising at least one fiber coated with a coating having a pigment paste composition dispersed within a polymer base, wherein the pigment paste composition comprises a) a flame retardant comprising a combination of antimony oxide, zinc borate, and zinc sulfide; b) a coloring agent; c) a solvent comprising a plasticizer; and d) a wetting and dispersing agent.

Item 19. The fabric of Item 18, wherein the flame retardant is present in the pigment paste composition in an amount of about 30.0 wt% to about 40.0 wt% based on the total weight % of the pigment paste composition.

Item 20. The fabric of Item 18, wherein the antimony oxide, the zinc borate, and the zinc sulfide are present in a ratio of about 2:1:1 to about 1:2:2.

Item 21. The fabric of Item 18, wherein the antimony oxide is present at not greater than about 15.0 wt% of the total weight % of the pigment paste composition.

Item 22. The fabric of Item 18, wherein the coloring agent comprises carbon black, an iron black pigment, a quinacridone pigment, a cromophtal pigment, an azo pigment, a diketopyrrolopyrrole pigment, an anthraquinone pigment, an imidazolone pigment, a titanium yellow pigment, an indanthrene pigment, a phthalocyanine pigment, ultramarine blue, iron blue, a dioxazine pigment, titanium oxide, aluminum silicate, silicon oxide, or a combination thereof.

Item 23. The fabric of Item 18, wherein the coloring agent is present in an amount of about 1.0 wt% to about 10.0 wt% based on the total weight % of the pigment paste composition.

Item 24. The fabric of Item 18, wherein the plasticizer comprises a terephthalate, an ortho-phthalate, a trimellitate, an adipate, a benzoate, an epoxidized vegetable oil, a sulfonamide, an organophosphate, a glycol/polyether blend, a polymeric plasticizer, a biodegradable plasticizer, or a combination thereof.

Item 25. The fabric of Item 24, wherein the plasticizer is dioctyl terephthalate.

Item 26. The fabric of Item 18, wherein the solvent is present in an amount of about 35.0 wt% to about 60.0 wt% based on the total weight % of the pigment paste composition.

Item 27. The fabric of Item 18, wherein the wetting and dispersing agent is a polar acidic ester of an alcohol, an alkylammonium salt of a high molecular weight copolymer, a modified urea solution, or combinations thereof.

Item 28. The fabric of Item 18, having a flame height of less than 30.0 centimeters, as measured by ASTM D6413 or ASTM D3656.

Item 29. The fabric of Item 18, wherein the polymer base comprises polyvinyl chloride (PVC), polyethylene, polypropylene, polystyrene, polyamide, chlorinated polyolefin, chlorinated rubber, a chlorinated ethylene vinyl acetate copolymer, polyacrylate, an ethylene vinyl acetate copolymer, polyurethane, polystyrene-butadiene, or combinations thereof.

Item 30. The fabric of Item 29, wherein the polymer base comprises PVC.

Item 31. The fabric of Item 18, wherein the pigment paste composition does not settle after one month unmoved and readily disperses into the polymer base.

Item 32. The fabric of Item 18, wherein the pigment paste composition is present in the polymer base at about 3.0 wt% to about 15.0 wt% of the total weight % of the polymer base.

Item 33. The fabric of Item 18, wherein the coating is present on the at least one fiber at a thickness of about 10 µm to about 200 µm.

Item 34. The fabric of Item 18, wherein the at least one fiber is an at least one first fiber and an at least one second fiber, wherein the at least one first fiber is woven in a main direction with the at least one second fiber in a cross direction.

Item 35. The fabric of Item 18, wherein the at least one fiber comprises a monofilament or a multifilament of a material including fiberglass, steel, aluminum, polyester, polyethylene, polypropylene, polyamide, polyaramid, carbon fiber, or a combinations thereof.

Item 36. A method of providing a flame retardant composition comprising providing a pigment paste composition comprising a) a flame retardant comprising a combination of antimony oxide, zinc borate, and zinc sulfide; b) a coloring agent; c) a solvent comprising a plasticizer; and d) a wetting and dispersing agent.

Item 37. The method of providing the flame retardant composition of Item 36, wherein the flame retardant is present in the pigment paste composition in an amount of about 30.0 wt% to about 40.0 wt% based on the total weight % of the pigment paste composition.

Item 38. The method of Item 36, wherein the antimony oxide, the zinc borate, and the zinc sulfide are present in a ratio of about 2:1:1 to about 1:2:2.

Item 39. The method of Item 36, wherein the antimony oxide is present at not greater than about 15.0 wt% based on the total weight % of the pigment paste composition.

Item 40. The method of Item 36, wherein the coloring agent comprises carbon black, an iron black pigment, a quinacridone pigment, a cromophtal pigment, an azo pigment, a diketopyrrolopyrrole pigment, an anthraquinone pigment, an imidazolone pigment, a titanium yellow pigment, an indanthrene pigment, a phthalocyanine pigment, ultramarine blue, iron blue, a dioxazine pigment, titanium oxide, aluminum silicate, silicon oxide, or a combination thereof.

Item 41. The method of Item 36, wherein the coloring agent is present in an amount of about 1.0 wt% to about 10.0 wt% based on the total weight % of the pigment paste composition.

Item 42. The method of Item 36, wherein the plasticizer comprises a terephthalate, an ortho-phthalate, a trimellitate, an adipate, a benzoate, an epoxidized vegetable oil, a sulfonamide, an organophosphate, a glycol/polyether blend, a polymeric plasticizer, a biodegradable plasticizer, or a combination thereof.

Item 43. The method of Item 42, wherein the plasticizer is dioctyl terephthalate.

Item 44. The method of Item 36, wherein the solvent is present in an amount of about 35.0 wt% to about 60.0 wt% based on the total weight % of the pigment paste composition.

Item 45. The method of Item 36, wherein the wetting and dispersing agent is a polar acidic ester of an alcohol, an alkylammonium salt of a high molecular weight copolymer, a modified urea solution, or combinations thereof.

Item 46. The method of Item 36, further comprising dispersing the pigment paste composition within a polymer base.

Item 47. The method of Item 46, wherein the polymer base comprises polyvinyl chloride (PVC), polyethylene, polypropylene, polystyrene, polyamide, chlorinated polyolefin, chlorinated rubber, a chlorinated ethylene vinyl acetate copolymer, polyacrylate, an ethylene vinyl acetate copolymer, polyurethane, polystyrene-butadiene, or combinations thereof.

Item 48. The method of Item 47, wherein the polymer base comprises PVC.

Item 49. The method of Item 46, wherein the pigment paste composition does not settle after one month unmoved and readily disperses into the polymer base.

Item 50. The method of Item 46, wherein the pigment paste composition is present in the polymer base at about 3.0 wt% to about 15.0 wt% of the total weight % of the polymer base.

Item 51. The method of Item 46, further comprising coating the pigment paste composition dispersed within the polymer base on at least one fiber for a woven or nonwoven textile, screen, scrim, or combination thereof.

Item 52. The method of Item 51, wherein the coated at least one fiber has a flame height of less than 30.0 centimeters, as measured by ASTM D6413 or ASTM D3656.

Item 53. A method of making a woven screen comprising applying a coating on at least one first fiber and at least one second fiber, the coating having a pigment paste composition dispersed within a polymer base, the pigment paste composition comprising a) a flame retardant comprising a combination of antimony oxide, zinc borate, and zinc sulfide; b) a coloring agent; c) a solvent comprising a plasticizer; and d) a wetting and dispersing agent; and orienting the at least one first fiber in a main direction; and orienting the at least one second fiber in a cross direction relative to the main direction.

Item 54. The method of Item 53, wherein the cross direction is perpendicular to the main direction.

Item 55. The method of Item 53, further comprising weaving the at least one first fiber in the main direction with the at least one second fiber in the cross direction.

Item 56. The method of Item 53, wherein the at least one first fiber and the at least one second fiber comprises a monofilament or a multifilament of a material including fiberglass, steel, aluminum, polyester, polyethylene, polypropylene, polyamide, polyaramid, carbon fiber, or combinations thereof.

Item 57. The method of Item 53, wherein the flame retardant is present in the pigment paste composition in an amount of about 30.0 wt% to about 40.0 wt% based on the total weight % of the pigment paste composition.

Item 58. The method of Item 53, wherein the antimony oxide, the zinc borate, and the zinc sulfide are present in a ratio of about 2:1:1 to about 1:2:2.

Item 59. The method of Item 53, wherein the antimony oxide is present at not greater than about 15.0 wt% based on the total weight % of the pigment paste composition.

Item 60. The method of Item 53, wherein the coloring agent comprises carbon black, an iron black pigment, a quinacridone pigment, a cromophtal pigment, an azo pigment, a diketopyrrolopyrrole pigment, an anthraquinone pigment, an imidazolone pigment, a titanium yellow pigment, an indanthrene pigment, a phthalocyanine pigment, ultramarine blue, iron blue, a dioxazine pigment, titanium oxide, aluminum silicate, silicon oxide, or a combination thereof.

Item 61. The method of Item 53, wherein the coloring agent is present in an amount of about 1.0 wt% to about 10.0 wt% based on the total weight % of the pigment paste composition.

Item 62. The method of Item 53, wherein the plasticizer comprises a terephthalate, an ortho-phthalate, a trimellitate, an adipate, a benzoate, an epoxidized vegetable oil, a sulfonamide, an organophosphate, a glycol/polyether blend, a polymeric plasticizer, a biodegradable plasticizer, or a combination thereof.

Item 63. The method of Item 62, wherein the plasticizer is dioctyl terephthalate.

Item 64. The method of Item 53, wherein the solvent is present in an amount of about 35.0 wt% to about 60.0 wt% based on the total weight % of the pigment paste composition.

Item 65. The method of Item 53, wherein the wetting and dispersing agent is a polar acidic ester of an alcohol, an alkylammonium salt of a high molecular weight copolymer, a modified urea solution, or combinations thereof.

Item 66. The method of Item 53, wherein the screen has a flame height of less than 30.0 centimeters, as measured by ASTM D6413 or ASTM D3656.

Item 67. The method of Item 53, wherein the polymer base comprises polyvinyl chloride (PVC), polyethylene, polypropylene, polystyrene, polyamide, chlorinated polyolefin, chlorinated rubber, a chlorinated ethylene vinyl acetate copolymer, polyacrylate, an ethylene vinyl acetate copolymer, polyurethane, polystyrene-butadiene, or combinations thereof.

Item 68. The method of Item 67, wherein the polymer base comprises PVC.

Item 69. The method of Item 53, wherein the pigment paste composition does not settle after one month unmoved and readily disperses into the polymer base.

Item 70. The method of Item 53, wherein the pigment paste composition is present in the polymer base at about 3.0 wt% to about 15.0 wt% of the total weight % of the polymer base.

Item 71. The method of Item 53, wherein the coating is present on the at least one first fiber and the at least one second fiber at a thickness of about 10 µm to about 200 µm.

The concepts described herein will be further described in the following examples, which do not limit the scope of the invention described in the claims. Some of the parameters below have been approximated for convenience.

### EXAMPLES

A pigment paste composition is provided to better disclose and teach processes and compositions of the present invention.

The table below indicates two example formulations to form a 2,000 gram batch of pigment suspensions of this invention. The mass of antimony oxide, zinc borate, and zinc sulfide are 200 g (10 wt.%), 200 g (10wt.%), and 320 g (16 wt.%) respectively in Example 1. The mass of antimony oxide, zinc borate, and zinc sulfide are 400 g (20 wt.%), 200 g (10 wt.%), and 320 g (16 wt.%) respectively in Example 2.

**Table**

| Material | Example 1 | | Example 2 | |
|---|---|---|---|---|
| | Weight, g | Content, wt.% | Weight, g | Content, wt.% |
| Antimony Oxide | 200 | 10.0% | 400 | 20.0% |
| Zinc Borate | 200 | 10.0% | 200 | 10.0% |
| Zinc Sulfide | 320 | 16.0% | 320 | 16.0% |
| Di(2-ethylhexyl)terephthalate (DOTP) | 1154 | 57.7% | 950 | 47.5% |
| Carbon Black | 100 | 5.0% | 100 | 5.0% |
| Wetting and Dispersing Agents | 26 | 1.3% | 30 | 1.5% |
| Total | 2000 | 100.0% | 2000 | 100.0% |

The exemplary pigment paste compositions are very stable without any settling after one month unmoved and readily disperse into a polyvinyl chloride (PVC) polymer base including an optional additive such as, for example, a plasticizer. The pigment paste provides good fire retardant behavior for the coating even when a small quantity (e.g. about 5.0 wt.%) of it is used. A PVC coating with 5.0 wt.% of the pigment paste on an insect screen can meet the specification described in ASTM D3656 (Standard Specification for Insect Screening and Louver Cloth Woven from Vinyl-Coated Glass Yarns) or ASTM D6413 (the Standard Test Method for Flame Resistance of Textiles (vertical test)). In particular, the flame height on the insect screen is less than 30.0 cm after 12 seconds of exposure.

## Claims

1. A pigment paste composition comprising:
a) a flame retardant comprising a combination of antimony oxide, a borate compound, and zinc sulfide;
b) a coloring agent;
c) a solvent comprising a plasticizer; and
d) a wetting and dispersing agent.

2. A method of providing a flame retardant composition comprising:
providing a pigment paste composition comprising:
a) a flame retardant comprising a combination of antimony oxide, a borate compound, and zinc sulfide;
b) a coloring agent;
c) a solvent comprising a plasticizer; and
d) a wetting and dispersing agent.

3. A fabric comprising at least one fiber coated with a coating having the pigment paste composition of claim 1, wherein the pigment paste composition is dispersed within a polymer base.

4. A method of making a woven screen comprising:
applying a coaling on at least one first fiber and at least one second fiber, the coating having a pigment paste composition dispersed within a polymer base, the pigment paste composition comprising :
a) a flame retardant comprising a combination of antimony oxide, a borate compound and zinc sulfide;
b)a coloring agent;
c)a solvent comprising a plasticizer, and
d) a wetting and dispersing agent, and
orienting the at least one first fiber in a main direction; and
orienting the at least one second
fiber in a cross direction relative to the main direction.

5. The pigment paste composition, the method of providing a flame retardant composition, the fabric or the method of making a woven screen of any of the preceding claims, wherein in the flame retardant the horate compound is zinc borate, and the flame retardant is present in the pigment paste composition in an amount of about 30.0 wt% to about 40.0 wt%, based on the total weight % of the pigment paste composition.

6. The pigment paste composition, the method of providing a flame retardant composition, the fabric or the method of making a woven screen of claims 1, 2, 3, or 4, wherein the borate compound is zinc borate and the antimony oxide, the borate compound, and the zinc sulfide are present in a ratio of about 2:1:1 to about 1:2:2.

7. The pigment paste composition, the method of providing a flame retardant composition, the fabric or the method of making a woven screen
of claims 1, 2, 3, or 4, wherein the antimony oxide is present at not greater than about 15.0 wt%, based on the total weight % of the pigment paste composition.

8. The pigment paste composition, the method of providing a flame retardant composition, the fabric or the method of making a woven screen
of claims 1, 2, 3, or 4, wherein the plasticizer comprises a terephthalate, an ortho-phthalate, a trimellitate, an adipate, a benzoate, an epoxidized vegetable oil, a sulfonamide, an organophosphate, a glycol/polyether blend, a polymeric plasticizer, a biodegradable plasticizer, or a combination thereof.

9. The pigment paste composition, the method of providing a flame retardant composition, the fabric or the method of making a woven screen
of claims 1, 2, 3, or 4, wherein the solvent is present in an amount of about 35.0 wt% to about 60.0 wt% based on the total weight % of the pigment paste composition.

10. The pigment paste composition, the method of providing a flame retardant composition, the fabric or the method of making a woven screen
of claims 1, 2, 3, or 4, wherein the wetting and dispersing agent is a polar acidic ester of an alcohol, an alkylammonium salt of a high molecular weight copolymer, a modified urea solution, or combinations thereof.

11. The pigment paste composition or the method of providing a flame retardant composition of claims 1 or 2, wherein the pigment paste composition is dispersed within a polymer base.

12. The pigment paste composition, the method of providing a flame retardant composition, the fabric or the method of making a woven screen
of claims 3, 4, or 11, wherein the pigment paste composition is present in the polymer base at about 3.0 wt% to about 15.0 wt% of the total weight % of the polymer base.

13. The fabric or the method of making a woven screen
of claims 3 or 4, having a flame height of less than 30.0 centimeters, as measured by ASTM D6413 or ASTM D3656.

14. The fabric or the method of making a woven screen of
claims 3 or 4, wherein the coating is present on the at least one fiber at a thickness of about 10 µm to about 200 µm.

15. The fabric or the method of making a woven screen
of claims 3 or 4, wherein the at least one fiber comprises a monofilament or a multifilament of a material including fiberglass, steel, aluminum, polyester, polyethylene, polypropylene, polyamide, polyaramid, carbon fiber, or a combinations thereof.

## Patentansprüche

1. Pigmentpastenzusammensetzung, umfassend:
a) ein Flammschutzmittel, umfassend eine Kombination aus Antimonoxid, einer Borat-Verbindung, und Zinksulfid;
b) ein Färbemittel;
c) ein Lösungsmittel, umfassend einen Weichmacher; und
d) ein Benetz- und Dispergiermittel.

2. Verfahren zum Bereitstellen einer Flammschutzzusammensetzung, umfassend:
Bereitstellen einer Pigmentpastenzusammensetzung, umfassend:
a) ein Flammschutzmittel, umfassend eine Kombination aus Antimonoxid, einer Borat-Verbindung, und Zinksulfid;
b) ein Färbemittel;
c) ein Lösungsmittel, umfassend einen Weichmacher; und
d) ein Benetz- und Dispergiermittel.

3. Gewebe, umfassend mindestens eine Faser, die mit einer Beschichtung versehen ist, die die Pigmentpastenzusammensetzung nach Anspruch 1 aufweist, wobei die Pigmentpastenzusammensetzung innerhalb eines Basispolymers dispergiert ist.

4. Verfahren zum Herstellen eines gewebten Siebs, umfassend:
Aufbringen einer Beschichtung auf mindestens eine erste Faser und mindestens eine zweite Faser, wobei die Beschichtung eine Pigmentpastenzusammensetzung aufweist, die innerhalb eines Basispolymers dispergiert ist, wobei die Pigmentpastenzusammensetzung umfasst:
a) ein Flammschutzmittel, umfassend eine Kombination aus Antimonoxid, einer Borat-Verbindung und Zinksulfid;
b) ein Färbemittel;
c) ein Lösungsmittel, umfassend einen Weichmacher, und
d) ein Benetz- und Dispergiermittel, und
Ausrichten der mindestens einen ersten Faser in einer Hauptrichtung; und
Ausrichten der mindestens einen zweiten Faser in einer Querrichtung relativ zu der Hauptrichtung.

5. Pigmentpastenzusammensetzung, das Verfahren zum Bereitstellen einer Flammschutzzusammensetzung, das Gewebe oder das Verfahren zum Herstellen eines gewebten Siebs nach einem der vorhergehenden Ansprüche, wobei in dem Flammschutzmittel die Borat-Verbindung Zink-Borat ist, und das Flammschutzmittel in der Pigmentpastenzusammensetzung in einer Menge von etwa 30,0 Gew.-% bis etwa 40,0 Gew.-%, bezogen auf die gesamten Gew.-% der Pigmentpastenzusammensetzung, vorhanden ist.

6. Pigmentpastenzusammensetzung, das Verfahren zum Bereitstellen einer Flammschutzzusammensetzung, das Gewebe oder das Verfahren zum Herstellen eines gewebten Siebs nach den Ansprüchen 1, 2, 3, oder 4, wobei die Borat-Verbindung Zink-Borat ist und das Antimonoxid, die Borat-Verbindung, und das Zinksulfid in einem Verhältnis von etwa 2:1:1 bis etwa 1:2:2 vorliegen.

7. Pigmentpastenzusammensetzung, das Verfahren zum Bereitstellen einer Flammschutzzusammensetzung, das Gewebe oder das Verfahren zum Herstellen eines gewebten Siebs nach den Ansprüchen 1, 2, 3, oder 4, wobei das Antimonoxid in nicht mehr als etwa 15,0 Gew.-%, bezogen auf das Gesamtgewicht der Pigmentpastenzusammensetzung, vorliegt.

8. Pigmentpastenzusammensetzung, das Verfahren zum Bereitstellen einer Flammschutzzusammensetzung, das Gewebe oder das Verfahren zum Herstellen eines gewebten Siebs nach den Ansprüchen 1, 2, 3, oder 4, wobei der Weichmacher ein Terephthalat, ein Ortho-Phtalat, ein Trimellitat, ein Adipat, ein Benzoat, ein epoxidiertes Pflanzenöl, ein Sulfonamid, ein Organophosphat, eine Glykol/Polyethermischung, einen polymeren Weichmacher, einen biologisch abbaubaren Weichmacher oder eine Kombination daraus umfasst.

9. Pigmentpastenzusammensetzung, das Verfahren zum Bereitstellen einer Flammschutzzusammensetzung, das Gewebe oder das Verfahren zum Herstellen eines gewebten Siebs nach den Ansprüchen 1, 2, 3, oder 4, wobei das Lösungsmittel in einer Menge von etwa 35,0 Gew.-% bis etwa 60,0 Gew.-%, bezogen auf das Gesamtgewicht der Pigmentpastenzusammensetzung, vorliegt.

10. Pigmentpastenzusammensetzung, das Verfahren zum Bereitstellen einer Flammschutzzusammensetzung, das Gewebe oder das Verfahren zum Herstellen eines gewebten Siebs nach den Ansprüchen 1, 2, 3, oder 4, wobei das Benetz- und Dispergiermittel ein polarer saurer Ester eines Alkohols, ein Alkylammoniumsalz eines Copolymers mit hohem Molekulargewicht, eine modifizierte Harnstofflösung, oder Kombinationen daraus ist.

11. Pigmentpastenzusammensetzung oder das Verfahren zum Bereitstellen einer Flammschutzzusammensetzung nach den Ansprüchen 1 oder 2, wobei die Pigmentpastenzusammensetzung innerhalb eines Basispolymers dispergiert ist.

12. Pigmentpastenzusammensetzung, das Verfahren zum Bereitstellen einer flammhemmenden Zusammensetzung oder das Gewebe oder das Verfahren zum Herstellen eines gewebten Siebes nach den Ansprüchen 3, 4 oder 11, wobei die Pigmentpastenzusammensetzung in dem Basispolymer bei etwa 3,0 Gew.-% bis etwa 15,0 Gew.-% der gesamten Gew.-% des Basispolymers vorhanden ist.

13. Gewebe oder das Verfahren zum Herstellen eines gewebten Siebs nach den Ansprüchen 3 oder 4 mit einer Flammenhöhe von weniger als 30,0 Zentimeter, wie gemessen nach ASTM D6413 oder ASTM D3656.

14. Gewebe oder das Verfahren zum Herstellen eines gewebten Siebs nach den Ansprüchen 3 oder 4, wobei die Beschichtung auf der mindestens einen Faser in einer Dicke von etwa 10 µm bis etwa 200 µm vorliegt.

15. Gewebe oder das Verfahren zum Herstellen eines gewebten Siebs nach den Ansprüchen 3 oder 4, wobei die mindestens eine Faser ein Monofilament oder ein Multifilament aus einem Material umfasst, das Glasfaser, Stahl, Aluminium, Polyester, Polyethylen, Polypropylen, Polyamid, Polyaramid, Kohlefaser oder eine Kombination daraus enthält.

## Revendications

1. Composition de pâte pigmentaire comprenant :
a) un ignifugeant comprenant une combinaison d'oxyde d'antimoine, un composé de borate et du sulfure de zinc ;
b) un agent colorant ;
c) un solvant comprenant un agent plastifiant ; et
d) un agent de mouillage et de dispersion.

2. Procédé de fourniture d'une composition ignifugeante comprenant : la fourniture d'une composition de pâte pigmentaire comprenant :
a) un ignifugeant comprenant une combinaison d'oxyde d'antimoine, un composé de borate et du sulfure de zinc ;
b) un agent colorant ;
c) un solvant comprenant un agent plastifiant ; et
d) un agent de mouillage et de dispersion.

3. Tissu comprenant au moins une fibre revêtue d'un revêtement possédant la composition de pâte pigmentaire selon la revendication 1, dans lequel la composition de pâte pigmentaire est dispersée au sein d'une base polymère.

4. Procédé de fabrication d'un écran tissé comprenant :
l'application d'un revêtement sur au moins une première fibre et au moins une seconde fibre, le revêtement ayant une composition de pâte pigmentaire dispersée au sein d'une base polymère, la composition de pâte pigmentaire comprenant:
a) un ignifugeant comprenant une combinaison d'oxyde d'antimoine, un composé de borate et du sulfure de zinc ;
b) un agent colorant ;
c) un solvant comprenant un agent plastifiant, et
d) un agent de mouillage et de dispersion, et
l'orientation de l'au moins une première fibre dans une direction principale ; et
l'orientation de l'au moins une seconde fibre dans une direction transversale par rapport à la direction principale.

5. Composition de pâte pigmentaire, procédé de fourniture d'une composition ignifugeante, tissu ou procédé de fabrication d'un écran tissé selon l'une quelconque des revendications précédentes, dans lequel, dans l'ignifugeant, le composé de borate est du borate de zinc, et l'ignifugeant est présent dans la composition de pâte pigmentaire en une quantité d'environ 30,0 % en poids à environ 40,0 % en poids, sur la base du pourcentage en poids total de la composition de pâte pigmentaire.

6. Composition de pâte pigmentaire, procédé de fourniture d'une composition ignifugeante, tissu ou procédé de fabrication d'un écran tissé selon les revendications 1, 2, 3 ou 4, dans lequel le composé de borate est du borate de zinc et l'oxyde d'antimoine, le composé de borate et le sulfure de zinc sont présents dans un rapport d'environ 2:1:1 à environ 1:2:2.

7. Composition de pâte pigmentaire, procédé de fourniture d'une composition ignifugeante, tissu ou procédé de fabrication d'un écran tissé selon les revendications 1, 2, 3 ou 4, dans lequel l'oxyde d'antimoine est présent à raison de pas plus d'environ 15,0 % en poids, sur la base du pourcentage en poids total de la composition de pâte pigmentaire.

8. Composition de pâte pigmentaire, procédé de fourniture d'une composition ignifugeante, tissu ou procédé de fabrication d'un écran tissé selon les revendications 1, 2, 3 ou 4, dans lequel l'agent plastifiant comprend un téréphtalate, un ortho-phtalate, un trimellitate, un adipate, un benzoate, une huile végétale époxydée, un sulfonamide, un organophosphate, un mélange glycol/polyéther, un agent plastifiant polymère, un agent plastifiant biodégradable ou une combinaison de ceux-ci.

9. Composition de pâte pigmentaire, procédé de fourniture d'une composition ignifugeante, tissu ou procédé de fabrication d'un écran tissé selon les revendications 1, 2, 3 ou 4, dans lequel le solvant est présent en une quantité d'environ 35,0 % en poids à environ 60,0 % en poids sur la base du pourcentage en poids total de la composition de pâte pigmentaire.

10. Composition de pâte pigmentaire, procédé de fourniture d'une composition ignifugeante, tissu ou procédé de fabrication d'un écran tissé selon les revendications 1, 2, 3 ou 4, dans lequel l'agent de mouillage et de dispersion est un ester acide polaire d'un alcool, un sel alkylammonium d'un copolymère à masse moléculaire élevée, une solution d'urée modifiée, ou des combinaisons de ceux-ci.

11. Composition de pâte pigmentaire ou procédé de fourniture d'une composition ignifugeante selon les revendications 1 ou 2, dans lequel la composition de pâte pigmentaire est dispersée au sein d'une base polymère.

12. Composition de pâte pigmentaire, procédé de fourniture d'une composition ignifugeante, tissu ou procédé de fabrication d'un écran tissé selon les revendications 3, 4 ou 11, dans lequel la composition de pâte pigmentaire est présente dans la base polymère à raison d'environ 3,0 % en poids à environ 15,0 % en poids du poids total de la base polymère.

13. Tissu ou procédé de fabrication d'un écran tissé selon les revendications 3 ou 4, présentant une hauteur de flamme inférieure à 30,0 centimètres, telle que mesurée par ASTM D6413 ou ASTM D3656.

14. Tissu ou procédé de fabrication d'un écran tissé selon les revendications 3 ou 4, dans lequel le revêtement est présent sur ladite au moins une fibre à une épaisseur d'environ 10 µm à environ 200 µm.

15. Tissu ou procédé de fabrication d'un écran tissé selon les revendications 3 ou 4, dans lequel ladite au moins une fibre comprend un monofilament ou un multifilament d'un matériau incluant la fibre de verre, l'acier, l'aluminium, le polyester, le polyéthylène, le polypropylène, le polyamide, le polyaramide, une fibre de carbone, ou une combinaison de ceux-ci.
